# EUROPEAN PATENT APPLICATION

(11) **EP 4 624 853 A1**
(43) Date of publication of application: **01.10.2025**
(21) Application number: 23926407.0
(22) Date of filing: 02.11.2023
(51) Int. Cl.: F28D 9/00, F25B 1/00, B60H 1/32, F25B 41/40

(54) **MANIFOLD**

(30) Priority: 09.03.2023 JP 2023036309
(71) Applicant: AISIN CORPORATION, Kariya-shi, Aichi 448-8650 (JP)
(72) Inventor: MIZUNO, Yuya, Kariya-shi, Aichi 448-8650 (JP); MANABE, Takashi, Kariya-shi, Aichi 448-8650 (JP); YAMAZAKI, Tateki, Kariya-shi, Aichi 448-8650 (JP)
(74) Representative: Kramer Barske Schmidtchen Patentanwälte PartG mbB
(86) International application number: PCT/JP2023/039631
(87) International publication number: WO 2024/185199

(57) **Abstract**

A manifold includes a flow path housing in which a first flow path through which a cooling fluid at first temperature flows and a second flow path through which the cooling fluid at second temperature lower than the first temperature flows are formed, and a plate member to which the flow path housing is joined, in which the flow path housing includes a first housing in which the first flow path is formed and a second housing in which the second flow path is formed, and the first housing and the second housing are joined to the plate member so as to be separated from each other.

## Description

### TECHNICAL FIELD

The present disclosure relates to a manifold.

### BACKGROUND ART

A system related to thermal management such as an air-conditioning system of a vehicle is known (refer, for example, to Patent Literature 1). Patent Literature 1 discloses a thermal management system including a compressor that compresses low-temperature refrigerant vapor in a subsystem into high-temperature refrigerant vapor.

### CITATIONS LIST

### PATENT LITERATURE

Patent Literature 1: JP 2011-255879 A

### SUMMARY OF INVENTION

### TECHNICAL PROBLEMS

In a thermal management system disclosed in Patent Literature 1, for example, when a high-temperature flow path in which high-temperature refrigerant vapor compressed by a compressor circulates and a low-temperature flow path in which low-temperature refrigerant vapor circulates are disposed close to each other, heat exchange might occur between the high-temperature refrigerant and the low-temperature refrigerant.

The present disclosure has been made in view of the above problems, and provides a manifold that suppresses heat exchange between cooling fluids at different temperatures.

### SOLUTIONS TO PROBLEMS

A manifold according to the present disclosure is characterized in including a flow path housing including a first housing in which a first flow path through which a cooling fluid at first temperature flows is formed and a second housing in which a second flow path through which the cooling fluid at second temperature lower than the first temperature flows is formed, and a plate member to which the flow path housing is joined, in which the first housing and the second housing are joined to the plate member so as to be separated from each other.

According to this configuration, the first housing and the second housing of the flow path housing are joined to the plate member so as to be separated from each other. The first flow path through which the cooling fluid at the first temperature flows is formed in the first housing, and the second flow path through which the cooling fluid at the second temperature lower than the first temperature flows is formed in the second housing. That is, since the first housing and the second housing are not integrated and the first housing and the second housing are separated from each other, air having low thermal conductivity is interposed between the first housing and the second housing. Therefore, heat exchange between the cooling fluids at different temperatures can be suppressed.

### BRIEF DESCRIPTION OF DRAWINGS

FIG. 1 is a diagram illustrating a refrigerant circuit according to an embodiment.
FIG. 2 is a schematic view illustrating a flow path housing and a plate member according to the embodiment.
FIG. 3 is a diagram illustrating a configuration of the flow path housing according to the embodiment.
FIG. 4 is an enlarged view of the first housing illustrated in FIG. 3.
FIG. 5 is an enlarged view of the second housing illustrated in FIG. 3.

### DESCRIPTION OF EMBODIMENTS

Hereinafter, a manifold according to an embodiment of the present disclosure is described with reference to the drawings. Note that, the present invention is not limited to the following embodiment, and various modifications can be made without departing from the gist of the present invention.

### [Refrigerant Circuit]

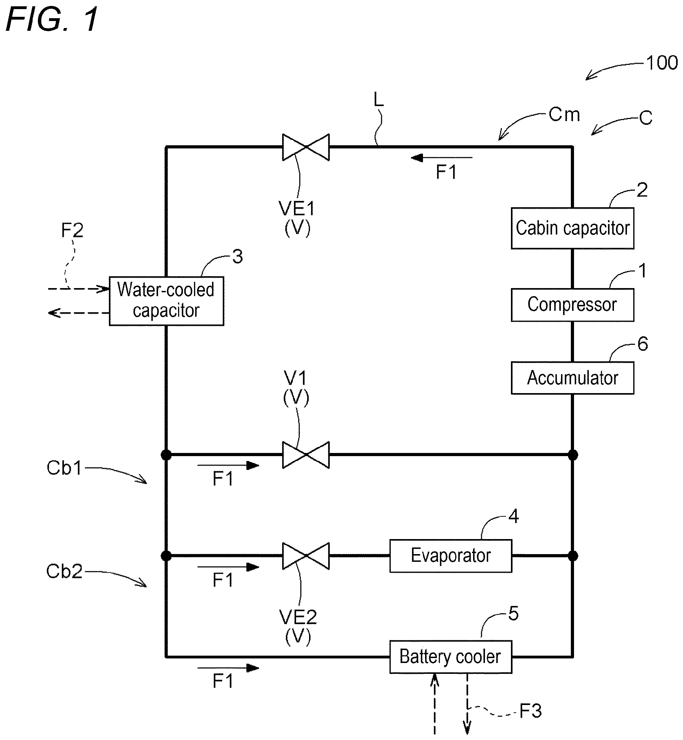

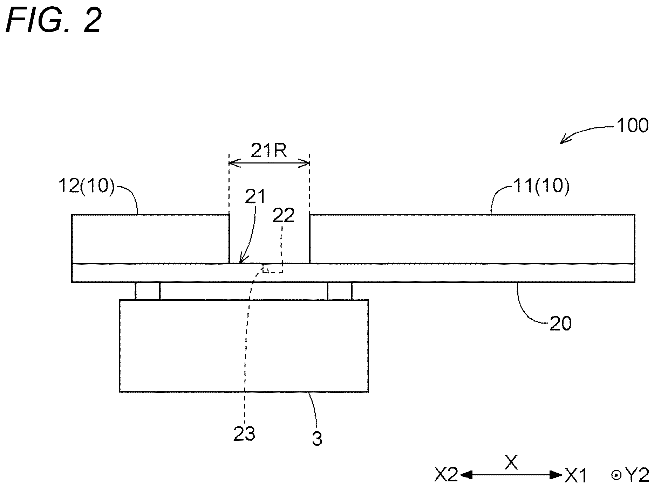

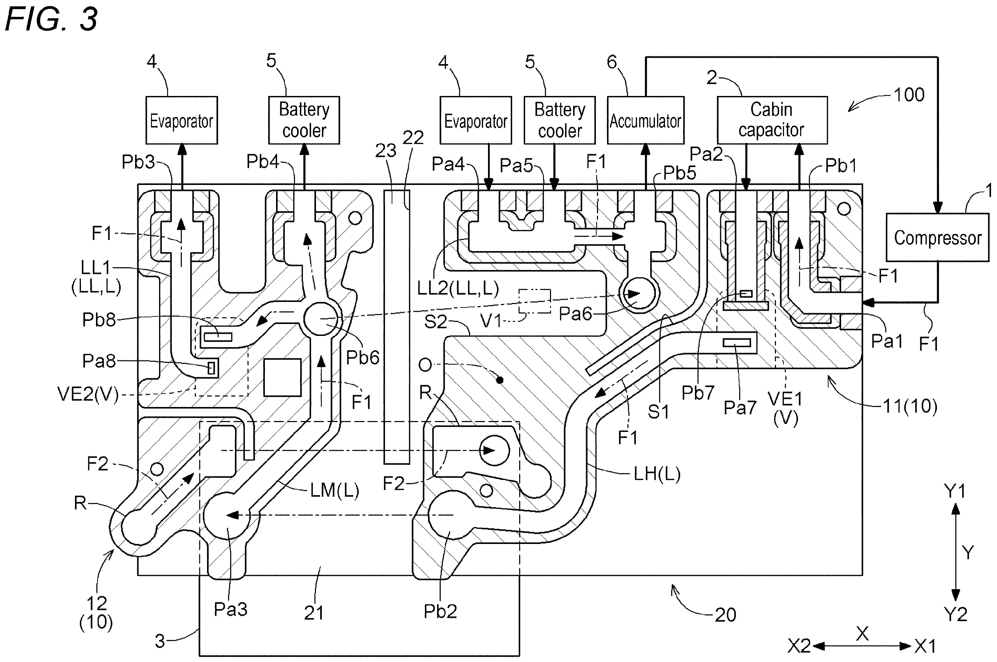

First, a refrigerant circuit C mounted on a vehicle such as an electric vehicle, a hybrid electric vehicle, or a fuel cell electric vehicle is described with reference to FIG. 1. The refrigerant circuit C is formed of a refrigerant flow path L in which a refrigerant F1 for cooling and heating that adjusts temperature of an interior of the vehicle circulates. The refrigerant F1 is, for example, hydrofluorocarbon (HFC), hydrofluoroolefin (HFO) or the like. Note that, the refrigerant flow path L is formed of a manifold 100 (refer to FIGS. 2 and 3) mounted on the vehicle.

As illustrated in FIG. 1, the refrigerant circuit C includes a compressor 1 (an example of a compressor), a cabin capacitor 2 (a capacitor for heating), a water-cooled capacitor 3 (an example of a condenser), an evaporator 4 (an example of an evaporator), a battery cooler 5 (an example of an evaporator), an accumulator 6, and a valve V. The compressor 1, the cabin capacitor 2, the water-cooled capacitor 3, the evaporator 4, the battery cooler 5, the accumulator 6, and the valve V are connected to one another via the refrigerant flow path L.

The valve V includes an on-off valve V1 provided between the water-cooled capacitor 3 and the accumulator 6. The valve V further includes a first expansion valve VE1 provided between the cabin capacitor 2 and the water-cooled capacitor 3, and a second expansion valve VE2 provided between the water-cooled capacitor 3 and the evaporator 4.

The on-off valve V1 controls (circulates or blocks) a flow of the refrigerant F1 between the water-cooled capacitor 3 and the accumulator 6. In an opened state of the on-off valve V1, the refrigerant F1 flows through the compressor 1, the cabin capacitor 2, the first expansion valve VE1, the water-cooled capacitor 3, the on-off valve V1, the accumulator 6, and the compressor 1 in this order. Hereinafter, the refrigerant circuit C including the compressor 1, the cabin capacitor 2, the water-cooled capacitor 3, the on-off valve V1, and the accumulator 6 is referred to as a "main circuit Cm".

The first expansion valve VE1 and the second expansion valve VE2 expand the refrigerant F1 to adjust a pressure of the refrigerant F1. In an opened state of the second expansion valve VE2, the refrigerant F1 flows through the second expansion valve VE2 and the evaporator 4 in this order, and then flows into the main circuit Cm between the on-off valve V1 and the accumulator 6. Hereinafter, the refrigerant circuit C that branches from the main circuit Cm and is provided with the second expansion valve VE2 and the evaporator 4 is referred to as a "first branch circuit Cb1". For example, when the temperature in the vehicle interior is raised (during heating operation of the vehicle interior), the on-off valve V1 is opened, and the second expansion valve VE2 is closed. In contrast, when the temperature in the vehicle interior is lowered (during cooling operation of the vehicle interior), the on-off valve V1 is closed, and the second expansion valve VE2 is opened.

The battery cooler 5 includes an expansion valve, and the expansion valve of the battery cooler 5 is opened when the temperature of the battery is adjusted. In an opened state of the expansion valve of the battery cooler 5, the refrigerant F1 flows through the battery cooler 5, and then flows into the main circuit Cm between the on-off valve V1 and the accumulator 6. Hereinafter, the refrigerant circuit C that branches from the main circuit Cm and is provided with the battery cooler 5 is referred to as a "second branch circuit Cb2".

The compressor 1 compresses the refrigerant F1 to turn the refrigerant F1 into a high-pressure gas. Hereinafter, the temperature of the refrigerant F1 compressed by the compressor 1 is referred to as first heating medium temperature (an example of first temperature). Note that, the first heating medium temperature is, for example, 80 degrees to 90 degrees.

The refrigerant F1 compressed by the compressor 1 is sent to the cabin capacitor 2, exchanges heat with air in the vehicle interior during heating operation (temperature lowers by heat loss), and is sent to the water-cooled capacitor 3 via the first expansion valve VE1. In the water-cooled capacitor 3, a first heating medium F2 circulating in a circuit (for example, a cooling circuit for cooling an electronic circuit or the like mounted on the vehicle) different from the refrigerant circuit C circulates. The first heating medium F2 is cooling water such as a long life coolant (LLC), insulating oil such as paraffins, and a refrigerant such as hydrofluorocarbon (HFC) or hydrofluoroolefin (HFO). The refrigerant F1 sent to the water-cooled capacitor 3 exchanges heat with the first heating medium F2 that circulates in the water-cooled capacitor 3 (temperature lowers by heat loss). Hereinafter, the temperature of the refrigerant F1 lowered in the water-cooled capacitor 3 is referred to as second heating medium temperature (an example of second temperature). Note that, the second heating medium temperature is, for example, 60 degrees to 85 degrees, and the refrigerant F1 after the temperature is lowered in the water-cooled capacitor 3 is high-pressure liquid.

The refrigerant F1 sent to the second expansion valve VE2 is expanded to be in a state in which liquid and gas are mixed (atomized state), and sent to the evaporator 4. Hereinafter, the temperature of the refrigerant F1 expanded by the second expansion valve VE2 is referred to as third heating medium temperature (an example of second temperature). The third heating medium temperature is, for example, 15 degrees to 25 degrees. In the evaporator 4, the refrigerant F1 exchanges heat with air introduced from outside (temperature rises by obtained heat) to vaporize.

The refrigerant F1 sent to the battery cooler 5 is expanded by an expansion valve of the battery cooler 5. In the battery cooler 5, a second heating medium F3 circulating in another circuit (for example, a cooling circuit for cooling a battery mounted on the vehicle) different from the refrigerant circuit C circulates. The second heating medium F3 is cooling water such as a long life coolant (LLC), insulating oil such as paraffins, and a refrigerant such as hydrofluorocarbon (HFC) or hydrofluoroolefin (HFO). The refrigerant F1 sent to the battery cooler 5 exchanges heat with the second heating medium F3 that circulates in the battery cooler 5 (temperature rises by obtained heat) to vaporize. Hereinafter, the temperature of the refrigerant F1 after heat exchange in the evaporator 4 or the battery cooler 5 is referred to as fourth heating medium temperature (an example of third temperature). Note that, the fourth heating medium temperature is, for example, 15 degrees to 25 degrees.

The refrigerant F1 after the heat exchange in the evaporator 4 is sent to the accumulator 6, and the liquid contained in the refrigerant F1 is separated. The refrigerant F1 from which the liquid is separated returns to the compressor 1. The refrigerant F1 after the heat exchange in the battery cooler 5 is sent to the accumulator 6, and the liquid contained in the refrigerant F1 is separated. The refrigerant F1 from which the liquid is separated returns to the compressor 1.

As described above, the temperature of the refrigerant F1 flowing through the refrigerant flow path L in the refrigerant circuit C changes. Specifically, as for the temperature of the refrigerant F1, the temperature (first heating medium temperature) of the refrigerant F1 flowing from the compressor 1 toward the water-cooled capacitor 3 is the highest, the temperature (second heating medium temperature) of the refrigerant F1 flowing from the water-cooled capacitor 3 toward the second expansion valve VE2 and/or the battery cooler 5 is the second highest, and the temperature (third heating medium temperature) of the refrigerant F1 flowing from the second expansion valve VE2 toward the evaporator 4 and the temperature (fourth heating medium temperature) of the refrigerant F1 flowing from the evaporator 4 and/or the battery cooler 5 toward the accumulator 6 are the lowest. Therefore, hereinafter, the first heating medium temperature is referred to as "high temperature", the second heating medium temperature is referred to as "medium temperature", and the third heating medium temperature and the fourth heating medium temperature are referred to as "low temperature".

### [Configuration of Manifold]

Subsequently, with reference to FIGS. 2 and 3, a configuration of the manifold 100 in which the refrigerant flow path L described with reference to FIG. 1 is formed is described. FIGS. 2 and 3 are diagrams illustrating the configuration of the manifold 100. Note that, FIG. 3 is a diagram illustrating the flow path housing 10 as seen from a side opposite to a plate member 20, illustrating a cross section of the flow path housing 10 from which a wall provided on the side opposite to the plate member 20 is removed.

As illustrated in FIGS. 2 and 3, the manifold 100 includes the flow path housing 10 and the plate member 20. In the present embodiment, the plate member 20 has a rectangular shape in plan view (refer to FIG. 3), and each of the flow path housing 10 and the plate member 20 is made of metal (including an alloy) containing aluminum.

### [Configuration of Flow Path Housing]

The flow path housing 10 is separated into two. Hereinafter, one of the two flow path housings 10 is referred to as a "first housing 11", and the other is referred to as a "second housing 12". The first housing 11 and the second housing 12 are joined to the plate member 20 so as to be separated from each other. Each of the first housing 11 and the second housing 12 is joined to the plate member 20 by, for example, a bolt or the like.

By joining the flow path housing 10 to the plate member 20, the refrigerant flow path L described with reference to FIG. 1 is formed between the flow path housing 10 and the plate member 20 (refer to FIG. 3). In the vicinity of the water-cooled capacitor 3, a part of a heating medium flow path R is also formed in the flow path housing 10. The first heating medium F2 (refer to FIG. 1) that is to exchange heat with the refrigerant F1 in the water-cooled capacitor 3 flows through the heating medium flow path R.

### [Configuration of Refrigerant Flow Path]

As illustrated in FIG. 3, the refrigerant flow path L includes a high-temperature flow path LH (an example of a first flow path) through which the refrigerant F1 at the first heating medium temperature (high temperature) flowing from the compressor 1 toward the water-cooled capacitor 3 flows, a middle-temperature flow path LM (an example of a second flow path) through which the refrigerant F1 at the second heating medium temperature (middle temperature) flowing from the water-cooled capacitor 3 toward the second expansion valve VE2 and/or the battery cooler 5 flows, and a low-temperature flow path LL through which the refrigerant F1 at the third heating medium temperature (low temperature) flowing from the second expansion valve VE2 toward the evaporator 4 and the refrigerant F1 at the fourth heating medium temperature (low temperature) flowing from the evaporator 4 and/or the battery cooler 5 toward the accumulator 6 flow. Note that, the low-temperature flow path LL includes a first low-temperature flow path LL1 (an example of the second flow path) through which the refrigerant F1 flowing from the second expansion valve VE2 toward the evaporator 4 flows, and a second low-temperature flow path LL2 (an example of a third flow path) through which the refrigerant F1 flowing from the evaporator 4 and/or the battery cooler 5 toward the accumulator 6 flows.

The compressor 1, the cabin capacitor 2, the water-cooled capacitor 3, the evaporator 4, the battery cooler 5, the accumulator 6, and the valve V (the on-off valve V1, the first expansion valve VE1, and the second expansion valve VE2) are provided outside the flow path housing 10. Therefore, in the flow path housing 10, an inflow/outflow port through which the refrigerant F1 circulates among the compressor 1, the cabin capacitor 2, the water-cooled capacitor 3, the evaporator 4, the battery cooler 5, the accumulator 6, and the valve V is formed. Hereinafter, inflow ports through which the refrigerant F1 from the compressor 1, the cabin capacitor 2, the water-cooled capacitor 3, the evaporator 4, and the battery cooler 5 flows into the flow path housing 10 are referred to as a "first inflow port Pa1", a "second inflow port Pa2", a "third inflow port Pa3", a "fourth inflow port Pa4", and a "fifth inflow port Pa5", respectively, and outflow ports through which the refrigerant F1 flows out of the flow path housing 10 toward the cabin capacitor 2, the water-cooled capacitor 3, the evaporator 4, the battery cooler 5, and the accumulator 6 are referred to as a "first outflow port Pb 1", a "second outflow port Pb2", a "third outflow port Pb3", a "fourth outflow port Pb4", and a "fifth outflow port Pb5", respectively.

Inflow ports through which the refrigerant F1 flows into the flow path housing 10 from the on-off valve V1, the first expansion valve VE1, and the second expansion valve VE2 are referred to as a "sixth inflow port Pa6", a "seventh inflow port Pa7", and an "eighth inflow port Pa8", respectively, and outflow ports through which the refrigerant F1 flows out of the flow path housing 10 toward the on-off valve V1, the first expansion valve VE1, and the second expansion valve VE2 are referred to as a "sixth outflow port Pb6", a "seventh outflow port Pb7", and an "eighth outflow port Pb8", respectively.

Note that, the refrigerant flow path L through which the refrigerant F1 flowing from the accumulator 6 toward the compressor 1 flows is provided outside the flow path housing 10. Therefore, an inflow port through which the refrigerant F1 flows from the accumulator 6 into the flow path housing 10 and an outflow port through which the refrigerant F1 flows from the flow path housing 10 into the compressor 1 are not formed in the flow path housing 10.

Hereinafter, for convenience of description, as seen from the center O of the plate member 20, a direction toward the first inflow port Pa1 is referred to as an "X1 direction", an opposite direction is referred to as an "X2 direction", and a direction in the X1 direction and the X2 direction is referred to as an "X direction". As seen from the center O of the plate member 20, a direction toward the fourth outflow port Pb4 is referred to as a "Y1 direction", an opposite direction is referred to as a "Y2 direction", and a direction in the Y1 direction and the Y2 direction is referred to as a "Y direction". Note that, the X direction and the Y direction are orthogonal to each other. The center O of the plate member 20 is an intersection of diagonal lines of the plate member 20.

### [Configuration of First Housing]

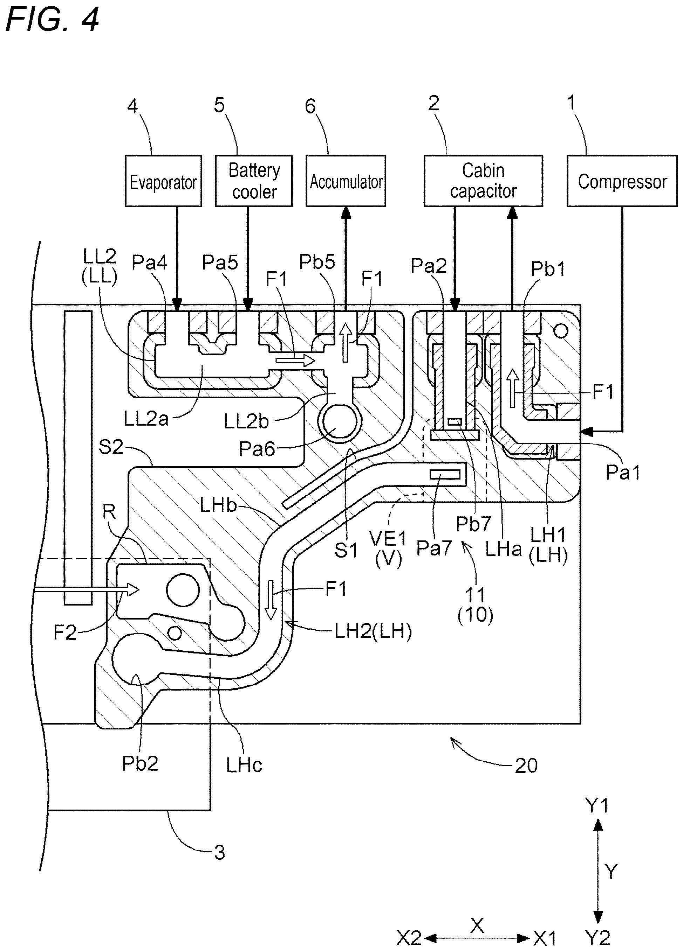

Next, a configuration of the first housing 11 is described with reference to FIG. 4. FIG. 4 is an enlarged view of the first housing 11 illustrated in FIG. 3.

### [Flow Path of First Housing]

As illustrated in FIG. 4, the high-temperature flow path LH and the second low-temperature flow path LL2 are provided (formed) in the first housing 11. The high-temperature flow path LH includes a first high-temperature flow path LH1 through which the refrigerant F1 flowing from the compressor 1 toward the cabin capacitor 2 flows, and a second high-temperature flow path LH2 through which the refrigerant F1 flowing from the cabin capacitor 2 toward the water-cooled capacitor 3 via the first expansion valve VE1 flows.

The first high-temperature flow path LH1 extends in an L shape from the first inflow port Pa1 provided at an end in the X1 direction of the first housing 11 as a base end to the first outflow port Pb1 provided at an end in the Y1 direction of the first housing 11.

The second high-temperature flow path LH2 extends from the second inflow port Pa2 provided at an end in the Y1 direction of the first housing 11 as a base end to the second outflow port Pb2 provided at an end in the X2 direction. Specifically, the second high-temperature flow path LH2 includes a first high-temperature extension portion LHa extending in the Y direction from the second inflow port Pa2 as a base end to the seventh outflow port Pb7, a second high-temperature extension portion LHb bending from the seventh inflow port Pa7 as a base end so as to bulge in the Y1 direction and the X2 direction, and a third high-temperature extension portion LHc extending in the X direction from a terminal end of the second high-temperature extension portion LHb as a base end to the second outflow port Pb2. Note that, the first high-temperature extension portion LHa extends to a position in the Y2 direction as seen from the second low-temperature flow path LL2. That is, the second high-temperature extension portion LHb and the third high-temperature extension portion LHc are located in the Y2 direction as seen from the second low-temperature flow path LL2.

The second low-temperature flow path LL2 extends in a T shape from the fourth inflow port Pa4 provided at an end in the X2 direction and the Y1 direction of the first housing 11 as a base end to the fifth outflow port Pb5 and the sixth inflow port Pa6. Note that, the fifth inflow port Pa5 and the fifth outflow port Pb5 are provided at an end in the Y1 direction of the first housing 11. The fourth inflow port Pa4, the fifth inflow port Pa5, and the fifth outflow port Pb5 are provided in this order in the X1 direction. The second low-temperature flow path LL2 includes a first low-temperature extension portion LL2a extending in the X direction and a second low-temperature extension portion LL2b extending in the Y direction so as to be orthogonal to the first low-temperature extension portion LL2a. The second low-temperature extension portion LL2b includes the sixth inflow port Pa6 as one end and the fifth inflow port Pa5 as the other end.

### [Slit of First Housing]

The first housing 11 includes a first slit S1 formed between the high-temperature flow path LH and the second low-temperature flow path LL2. The first slit S1 extends from between the high-temperature flow path LH (the first high-temperature extension portion LHa) and the second low-temperature flow path LL2 (the second low-temperature extension portion LL2b) at an end in the Y1 direction of the first housing 11 to a position exceeding the sixth inflow port Pa6 along the second high-temperature flow path LH2 (the first high-temperature extension portion LHa and the second high-temperature extension portion LHb). By forming the first slit S1 in the first housing 11, air having lower thermal conductivity than that of the material of the flow path housing 10 is interposed between the high-temperature flow path LH and the second low-temperature flow path LL2, and heat exchange between the refrigerant F1 flowing through the high-temperature flow path LH and the refrigerant F1 flowing through the second low-temperature flow path LL2 is suppressed.

The first housing 11 further includes a second slit S2 formed between the second low-temperature flow path LL2 and the heating medium flow path R through which the first heating medium F2 flows. The second slit S2 extends from between the heating medium flow path R and the first low-temperature extension portion LL2a at an end in the X2 direction of the first housing 11 to a position in front of the sixth inflow port Pa6 along the first low-temperature extension portion LL2a in the X1 direction. By forming the second slit S2, air is interposed between the second low-temperature flow path LL2 and the heating medium flow path R, and heat exchange between the refrigerant F1 flowing through the second low-temperature flow path LL2 and the first heating medium F2 flowing through the heating medium flow path R is suppressed. Note that, the heating medium flow path R is located in the Y1 direction as seen from the third high-temperature extension portion LHc.

### [Configuration of Second Housing]

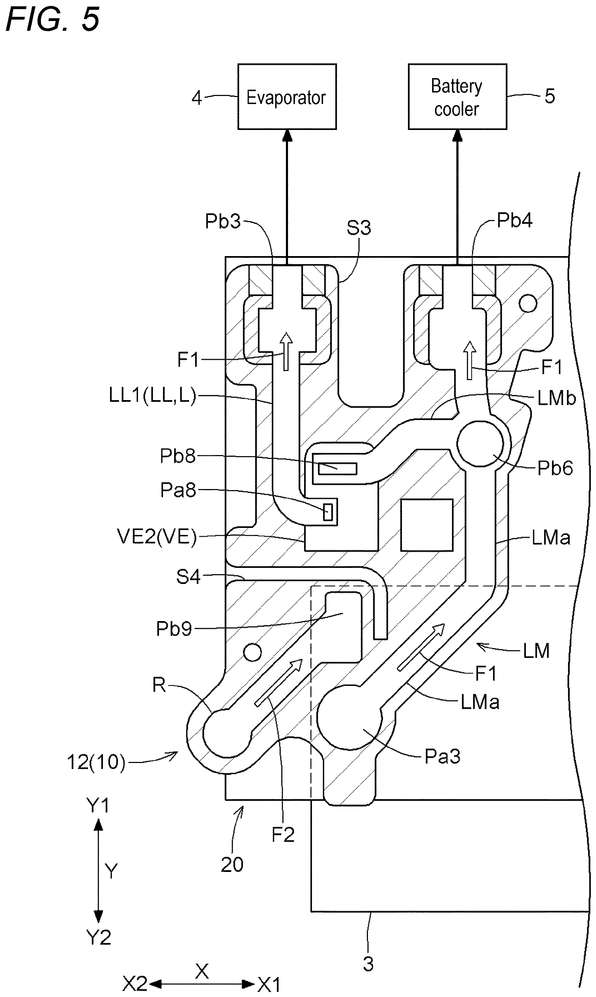

Next, a configuration of the second housing 12 is described with reference to FIG. 5. FIG. 5 is an enlarged view of the second housing 12 illustrated in FIG. 3.

### [Flow Path of Second Housing]

As illustrated in FIG. 5, the second housing 12 is provided with the middle-temperature flow path LM and the first low-temperature flow path LL1. The middle-temperature flow path LM extends from the third inflow port Pa3 provided at an end in the X1 direction and the Y2 direction of the second housing 12 as a base end to the eighth outflow port Pb8 and the fourth outflow port Pb4 provided at an end in the Y1 direction of the second housing 12 via the sixth outflow port Pb6. The middle-temperature flow path LM includes a first middle-temperature extension portion LMa extending in the Y direction from the third inflow port Pa3 as a base end to the fourth outflow port Pb4, and a second middle-temperature extension portion LMb branching from the first middle-temperature extension portion LMa at the sixth outflow port Pb6 and extending in the X direction to the eighth outflow port Pb8.

The first low-temperature flow path LL1 extends in the Y direction from the eighth inflow port Pa8 as a base end to the third outflow port Pb3 provided at an end in the Y1 direction of the second housing 12. Note that, the third outflow port Pb3 is located in the X2 direction as seen from the fourth outflow port Pb4.

### [Slit of Second Housing]

The second housing 12 includes a third slit S3 formed between the middle-temperature flow path LM and the first low-temperature flow path LL1. The third slit S3 extends along the first low-temperature flow path LL1 from between the middle-temperature flow path LM (first middle-temperature extension portion LMa) and the first low-temperature flow path LL1 at an end in the Y1 direction of the second housing 12 to a position in front of the eighth outflow port Pb8. By providing the third slit S3, air is interposed between the first low-temperature flow path LL1 and the middle-temperature flow path LM, and heat exchange between the refrigerant F1 flowing through the first low-temperature flow path LL1 and the refrigerant F1 flowing through the middle-temperature flow path LM is suppressed.

The second housing 12 further includes a fourth slit S4 formed between the first low-temperature flow path LL1 and middle-temperature flow path LM, and the heating medium flow path R. The fourth slit S4 extends in the X1 direction from between the first low-temperature flow path LL1 (the second expansion valve VE2) and the heating medium flow path R at an end in the X2 direction of the second housing 12, and extends so as to be bent in the Y2 direction at a position exceeding a ninth outflow port Pb9. By providing the fourth slit S4, air is interposed between the first low-temperature flow path LL1 and middle-temperature flow path LM, and the heating medium flow path R, and heat exchange between the refrigerant F1 flowing through the first low-temperature flow path LL1 and the middle-temperature flow path LM, and the first heating medium F2 flowing through the heating medium flow path R is suppressed. Note that, the heating medium flow path R is located in the Y2 direction as seen from the first low-temperature flow path LL1 and in the X2 direction as seen from the middle-temperature flow path LM.

### [Configuration of Plate]

Subsequently, referring back to FIG. 2, a configuration of the plate member 20 is described. As illustrated in FIG. 2, the plate member 20 includes a flat opposing surface 21 (main surface) opposed to the flow path housing 10, a groove 22 recessed in a direction separating from the flow path housing 10 than the opposing surface 21, and a heat insulating material 23 disposed in the groove 22. The groove 22 is formed, for example, by cutting the plate member 20. In the present embodiment, the groove 22 does not penetrate the plate member 20, and each of the first slit S1 to the fourth slit S4 described above penetrates the plate member 20. Note that, the groove 22 may penetrate the plate member 20.

The opposing surface 21 of the plate member 20 includes a portion where the first housing 11 and the second housing 12 are separated from each other in the X direction, that is, a non-opposing region 21R not opposed to neither of the first housing 11 and the second housing 12. The groove 22 is provided in the non-opposing region 21R. As described above, the heat insulating material 23 is disposed in the groove 22. Accordingly, heat conduction via the plate member 20 is suppressed. Note that, the heat insulating material 23 is made of resin or the like having lower thermal conductivity than that of the plate member 20.

### [Action Effect of Embodiment]

As described above, according to the present embodiment, the first housing 11 in which the high-temperature flow path LH through which the high-temperature refrigerant F1 flows is formed and the second housing 12 in which the middle-temperature flow path LM through which the middle-temperature refrigerant F1 lower than the high-temperature refrigerant F1 flows is formed are joined to the plate member 20 so as to be separated (separated) from each other. That is, since the first housing 11 and the second housing 12 are not integrated and the first housing 11 and the second housing 12 are separated from each other, air having low thermal conductivity is interposed between the first housing 11 and the second housing 12. Therefore, the heat exchange between the refrigerants F1 at different temperatures can be suppressed.

According to the present embodiment, the refrigerant F1 flowing from the compressor 1 toward the water-cooled capacitor 3 flows through the high-temperature flow path LH, and the refrigerant F1 flowing from the water-cooled capacitor 3 toward the evaporator 4 and/or the battery cooler 5, the refrigerant F1 at temperature lower than that of the high-temperature flow path LH flows through the middle-temperature flow path LM. Therefore, heat exchange between the refrigerant F1 flowing from the compressor 1 toward the water-cooled capacitor 3 and the refrigerant F1 flowing from the water-cooled capacitor 3 toward the evaporator 4 and/or the battery cooler 5 can be suppressed.

According to the present embodiment, in the first housing 11, the first slit S1 is formed between the high-temperature flow path LH and the second low-temperature flow path LL2 through which the refrigerant F1 at temperature (fourth heating medium temperature) lower than the temperature (first heating medium temperature) of the refrigerant F1 flowing through the high-temperature flow path LH flows, so that heat exchange between different refrigerants F1 can be suppressed. For example, even in a case where the first housing 11 cannot be separated due to circumstances such as securing strength for holding the water-cooled capacitor 3, the heat exchange between the refrigerants F1 at different temperatures can be suppressed by providing the first slit S1. It is not necessary to further divide the first housing 11, and an increase in the number of parts can be avoided.

According to the present embodiment, in the plate member 20, the groove 22 is formed between the first housing 11 and the second housing 12, and the heat insulating material 23 is disposed in the groove 22. Therefore, heat conduction between the first housing 11 and the second housing 12 can be suppressed via the plate member 20.

### [Another Embodiment]

The present disclosure may be configured as follows in addition to the above-described embodiment (one having the same function as that of the embodiment is denoted by the same number and reference numeral as that of the embodiment).

(1) The shape and position of the refrigerant flow path L (high-temperature flow path LH, medium-temperature flow path LM, and low-temperature flow path LL) described in the above-described embodiment are merely examples, and the refrigerant flow path L is not limited to the shape and position described in the above-described embodiment.
(2) The slit (the first slit S1 and the second slit S2) provided in the first housing 11 is not limited to the number, position, and shape described in the embodiment, and can be appropriately changed according to the position and shape of the refrigerant flow path L so that heat exchange between the refrigerants F1 at different temperatures flowing through the refrigerant flow path L can be suppressed. The same applies to the slit (the third slit S3 and the fourth slit S4) provided in the second housing 12.
(3) In the present embodiment, a case where the plate member 20 includes the groove 22 and the heat insulating material 23 disposed in the groove 22 has been described; however, the groove 22 and the heat insulating material 23 can be omitted from the plate member 20. In this case, it is preferable to select a material having low thermal conductivity as the material of the plate member 20.
(4) In the present embodiment, the configuration in which the refrigerant circuit C (the second branch circuit Cb2) is provided with the battery cooler 5 has been described as an example; however, the refrigerant circuit C may include a chiller instead of the battery cooler 5. Note that, in a case where the refrigerant circuit C includes the chiller instead of the battery cooler 5, the refrigerant circuit C further includes an expansion valve as a valve V between the water-cooled capacitor 3 and the chiller.
(5) In the present embodiment, the refrigerant F1 has been described as an example of the cooling fluid; however, in the present disclosure, this may be a fluid other than the refrigerant F1, for example, cooling water such as a long life coolant (LLC), insulating oil such as paraffin or the like.
(6) In the present embodiment, a case where the plate member 20 has a rectangular shape has been described; however, the shape of the plate member 20 is not limited to a rectangular shape and can be appropriately changed. The material of the flow path housing 10 and the plate member 20 is not limited to metal containing aluminum, and may be metal other than aluminum, a resin or the like.

In the embodiment described above, the following configuration is conceived.

(1) A manifold 100 according to the present disclosure is characterized in including a flow path housing 10 including a first housing 11 in which a high-temperature flow path LH (first flow path) through which a refrigerant F1 (cooling fluid) at first temperature flows is formed and a second housing 12 in which a middle-temperature flow path LM (second flow path) through which the refrigerant F1 (cooling fluid) at second temperature lower than the first temperature flows is formed, and a plate member 20 to which the flow path housing 10 is joined, in which the first housing 11 and the second housing 12 are joined to the plate member 20 so as to be separated from each other.
   According to this configuration, the first housing 11 and the second housing 12 of the flow path housing 10 are joined to the plate member 20 so as to be separated from each other. The high-temperature flow path LH (first flow path) through which the refrigerant F1 (cooling fluid) at the first temperature flows is formed in the first housing 11, and the medium-temperature flow path LM (second flow path) through which the refrigerant F1 (cooling fluid) at the second temperature lower than the first temperature flows is formed in the second housing 12. That is, since the first housing 11 and the second housing 12 are not integrated and the first housing 11 and the second housing 12 are separated from each other, air having low thermal conductivity is interposed between the first housing 11 and the second housing 12. Therefore, the heat exchange between the refrigerants F1 (cooling fluids) at different temperatures can be suppressed.
(2) In the manifold 100 according to (1), the refrigerant F1 (cooling fluid) flowing from the compressor 1 (compressor) toward the water-cooled capacitor 3 (condenser) may flow through the high-temperature flow path LH (first flow path), and the refrigerant F1 (cooling fluid) flowing from the water-cooled capacitor 3 (condenser) toward the evaporator 4 and/or the battery cooler 5 (evaporator) may flow through the middle-temperature flow path LM (second flow path).
   According to this configuration, heat exchange between relatively high-temperature refrigerant F1 (cooling fluid) flowing from the compressor 1 (compressor) toward the water-cooled capacitor 3 (condenser) and relatively low-temperature refrigerant F1 (cooling fluid) flowing from the water-cooled capacitor 3 (condenser) toward the evaporator 4 and/or the battery cooler 5 (evaporator) can be suppressed.
(3) In the manifold 100 according to (1) or (2), a second low-temperature flow path LL2 (third flow path) through which the refrigerant F1 (cooling fluid) at third temperature lower than the first temperature flows may be formed in the first housing 11, and a slit may be formed between the high-temperature flow path LH (first flow path) and the second low-temperature flow path LL2 (third flow path).
   According to this configuration, in the first housing 11, the slit is formed between the high-temperature flow path LH (first flow path) through which the refrigerant F1 (cooling fluid) at the first temperature flows and the second low-temperature flow path LL2 (third flow path) through which the refrigerant F1 (cooling fluid) at the third temperature lower than the first temperature flows, so that heat exchange between the refrigerants F1 at different temperatures can be suppressed. It is not necessary to further divide the first housing 11, and an increase in the number of parts can be avoided.
(4) In the manifold 100 according to any one of (1) to (3),
   the plate member 20 may include a groove 22 formed between the first housing 11 and the second housing 12.
   According to this configuration, in the plate member 20, the groove 22 is formed between the first housing 11 and the second housing 12. Therefore, heat conduction between the first housing 11 and the second housing 12 can be suppressed via the plate member 20.
(5) In the manifold 100 according to (4), the plate member 20 may further include a heat insulating material 23 disposed in the groove 22.

According to this configuration, the plate member 20 further includes the heat insulating material 23 disposed in the groove 22 is formed between the first housing 11 and the second housing 12. Therefore, heat conduction between the first housing 11 and the second housing 12 can be suppressed via the plate member 20.

### INDUSTRIAL APPLICABILITY

The present disclosure can be used for a manifold.

### REFERENCE SIGNS LIST

1: Compressor (compressor), 3: Water-cooled capacitor (condenser), 4: Evaporator (evaporator), 5: Battery cooler (evaporator), 10: Flow path housing, 11: First housing, 12: Second housing, 20: Plate member, 22: Groove, 23: Heat insulating material, 100: Manifold, F1: Refrigerant (cooling fluid), L: Refrigerant flow path, LH: High-temperature flow path (first flow path), LL2: Second low-temperature flow path (third flow path), LM: Middle-temperature flow path (second flow path), and S1: First slit (slit)

## Claims

1. A manifold comprising:
a flow path housing including a first housing in which a first flow path through which a cooling fluid at first temperature flows is formed and a second housing in which a second flow path through which the cooling fluid at second temperature lower than the first temperature flows is formed; and
a plate member to which the flow path housing is joined, wherein
the first housing and the second housing are joined to the plate member so as to be separated from each other.

2. The manifold according to claim 1, wherein
the cooling fluid flowing from a compressor toward a condenser flows through the first flow path, and
the cooling fluid flowing from the condenser toward the evaporator flows through the second flow path.

3. The manifold according to claim 1 or 2, wherein
a third flow path through which the cooling fluid at third temperature lower than the first temperature flows is formed in the first housing, and a slit is formed between the first flow path and the third flow path.

4. The manifold according to claim 1 or 2, wherein
the plate member includes a groove formed between the first housing and the second housing.

5. The manifold according to claim 4, wherein
the plate member further includes a heat insulating material disposed in the groove.
